# EUROPEAN PATENT APPLICATION

(11) **EP 1 198 046 A1**
(43) Date of publication of application: **17.04.2002**
(21) Application number: 01308671.5
(22) Date of filing: 11.10.2001
(51) Int. Cl.: H02G 3/04

(54) **Cable tray**

(30) Priority: 11.10.2000 GB 0024988
(71) Applicant: SWINTEX LIMITED, Bury Lancashire BL9 9NX (GB)
(72) Inventor: Houghton, Harry Vincent, Egerton, Bolton BL7 9EW (GB); Wallwork, Peter, Harwood, Bolton BL2 4JG (GB); Snowden, David, Great Sutton, South Wirral CH66 2GH (GB)
(74) Representative: Wilson Gunn M'Caw

(57) **Abstract**

A cable tray 1 including a formation 7 for engagement with a separate cable support 4,6,7,8 to enable the cable support to be mounted thereon. The formation may be an aperture and may engage with the cable tray with a snap fit. The cable tray may include a number of spaced apart rows of spaced apart formations. The cable support may include two arms 21 for receiving cable therebetween. The cable tray may include a cover 25 and clips for retaining the cover. The clips may be lockable. The cable tray may be moulded in one piece.

## Description

The present invention relates to a cable tray.

Cable trays are used in a variety of applications to support and protect cables, for example cables running from a cabin to a mobile telecommunications antenna on the flat roof of a building.

Conventional cable trays are formed from perforated sheet metal of square U-shaped cross-section. Individual trays are bolted together and usually mounted on separate support posts or other structures to raise them from the surface over which cables are to be conducted. Cables are laid into the channel formed by the tray and secured in place with ties passing through perforations in the metal sheet or clamps connected to the tray by threaded rods/bolts. Assembly of this type of cable tray can be costly, inconvenient and time consuming. This is especially so as skilled labour is often required to construct and install the cable trays.

Another known type of cable tray is formed from a rubber material. It is formed as a slab with channels running along its length. The channels are intended for receiving individual cables. As cable sizes and the combination of cable sizes in a particular installation varies it is necessary for many different types of tray to be produced for use in different circumstances. This is inconvenient and can lead to inventory problems for installers. The rubber trays have a flat underside and are usually placed directly onto a surface. This leads to three further problems. If water builds up on the surface on which a tray is placed it can enter the tray either through joints between individual tray sections or through drainage holes in the trays. The result is that cables in the tray may end up being immersed in water. This is undesirable. To avoid this it is necessary to raise the tray from the surface over which it runs. This is conventionally achieved in the same way as for perforated metal sheet trays, by supporting the tray on separate posts. This is inconvenient, especially on roof top installations where care must then be taken to spread the load placed on the roof through the posts to avoid damaging the roof. Another problem is that a cable tray installation placed onto a surface can form a dam to water on that surface, especially with the accumulation of debris, for example leaves, adjacent and under the trays. This is also undesirable. The third problem is that cable trays which are simply placed onto a surface must have sufficient mass to ensure stability. This can be expensive in terms of both material and transport costs.

Embodiments of the present invention have been made in consideration of the above and other problems associated with conventional cable trays.

According to an aspect of the present invention there is provided a cable tray having one or more separately formed cable supports mounted thereon.

According to another aspect of the present invention there is provided a moulded cable tray including a formation for engagement with a separate cable support to enable the cable support to be mounted on the tray.

Thus, a standard cable tray may be fitted with a cable support appropriate for a particular installation and that installation's specific cable sizes. As only different cable supports need to be produced rather than entire cable trays complexity of manufacture and inventory control is reduced.

The cable support and cable tray preferably respectively comprise engageable formations, which may comprise one or more projections and corresponding apertures for receiving those projections. The cable support and cable tray may be arranged to engage with a snap fit. The cable support and tray may be releasably engageable. Preferably, no special tools are required to engage or release the cable support and cable tray.

The cable tray preferably includes a plurality of spaced apart formations for receiving cable supports. It is easier to install a cable into a number of spaced apart supports than the continuous channels of the prior art. The plurality of formations may be arranged in a row, and a plurality of spaced apart rows of formations may be provided. The formations may comprise substantially parallel apertures or slots.

The cable support may comprise two spaced apart arms for receiving cable therebetween. The arms may define a slot and may be resiliently flexible. The cable supports are preferably moulded from a plastics material. The cable support may define a plurality of slots for receiving cable. The slot(s) may be arranged to capture or otherwise retain cable. In one embodiment the cable guide comprises a clamp.

The cable support may be fitted with a releasably engageable cap, operative to capture a cable on the support. A further cable support may be releasably mountable on a first cable support mounted on the cable tray. The further cable support may be operative to capture a cable on the support on which it is mounted.

The cable tray preferably includes a cover. Clips are preferably provided to retain the cover on the tray. The clips may be separately formed and then mounted on the cable tray. The clips are preferably lockable and may be lockable by insertion of a separate element.

The cable tray may comprise means for receiving ballast. This enables a lightweight cable tray to be manufactured and transported and subsequently weighted down when installed. The means for receiving ballast may comprise one or more receptacles. Suitable ballast includes sand and gravel. In one embodiment a cable tray comprises a number of open box structures which may serve as a means for receiving ballast. The box structures may include internal webs to increase their rigidity. It is desirable that any ballast may be retained below the level of any cables supported on the tray. This enhances the stability of the cable tray and is particularly advantageous where a cable tray is used as a walkway.

Preferably, the cable tray is formed in one piece, and may be moulded from a plastics material, such as recycled plasticized PVC. The material preferably has a Shore hardness of at least 60, but less than 95.

The cable support(s) are preferably mounted on a surface bounded on each of two opposite sides by two substantially parallel side walls.

The cable supports are preferably operative to support cable above the underside of the tray by at least 40mm, more preferably at least 75mm. This reduces the risk of cable supported in a cable tray from becoming submerged, and obviates the need for separate support posts.

The underside of the cable tray is preferably substantially flat, to spread the load exerted by the tray, but may include one or more channels to allow water to pass through the cable tray. This reduces the likelihood of a cable tray installation acting as a dam.

Preferably the cable tray is arranged to be engaged with other similar trays. In this regard opposite ends of the tray preferably respectively comprise engageable formations. Such formations allow trays to be engaged with each other end to end. The formations are preferably arranged to restrict relative movement of two engaged trays in three mutually orthogonal directions.

The cable tray is preferably arranged to nest with other similar trays when stacked. This helps reduce transport costs.

It is to be appreciated that certain features of any aspect of the invention whether described as essential or optional and which may or may not be described in the context of the same embodiment either in the foregoing or following specific description may be provided in any suitable combination in a single embodiment.

In order that the invention may be more clearly understood an embodiment thereof will now be described by way of example with reference to the accompanying drawings of which:
- Figure 1: is a plan view of an embodiment of a cable tray according to the invention;
- Figure 2: is a side elevation of the cable tray of Figure 1;
- Figure 3: is an end elevation of the cable tray of Figure 1;
- Figure 4: is a perspective view of a cable support for use with the cable tray of Figure 1;
- Figure 5: is a perspective view of a cap for the cable support of Figure 4;
- Figure 6: is an end view of a further cable support for mounting on the cable support of Figure 4;
- Figure 7: is an end view of another cable support;
- Figure 8: is an end view of another cable support;
- Figure 9: is a plan view of a cover for use with the cable tray of Figure 1;
- Figure 10: is a side elevation of the cover of Figure 7;
- Figure 11: is an underplan view of the cover of Figure 7;
- Figure 12: is a perspective view of a cover fixing clip;
- Figure 13: is a side view of the clip of Figure 12;
- Figure 14: is a side view of a locking element for the fixing clip of Figure 12;
- Figure 15: is an end view of the element of Figure 14;
- Figure 16: is an underplan view of the element of Figure 14;
- Figure 17: is a clip for fastening two cable trays of the type shown in Figure 1 together side by side;
- Figure 18: is a plan view of a curved cable tray compatible with that of Figure 1;
- Figure 19: is a plan view of a junction for use with the cable tray of Figure 1;
- Figure 20: is a plan view of a cover for the junction of Figure 19;
- Figure 21: is a plan view of a first part of another junction; and
- Figure 22: is a plan view of a second part of the junction of Figure 21.

In the drawings hidden detail is shown by broken lines. The drawings are not to scale and like reference numerals are used to refer to like parts throughout.

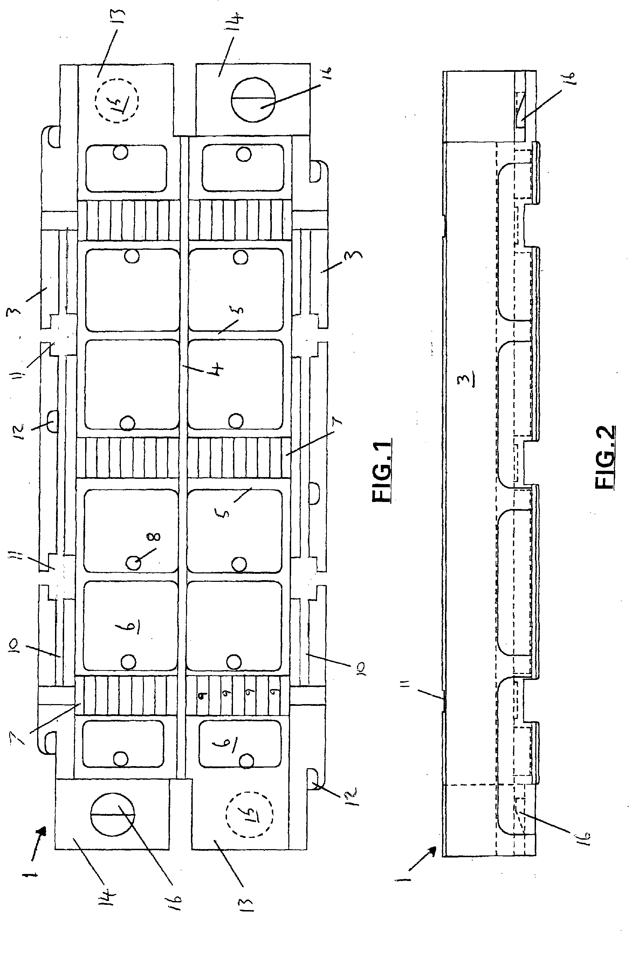

Referring to Figures 1 to 3 a cable tray 1 is moulded in one piece from recycled plasticized PVC with a Shore hardness of about 80.

The cable tray 1 comprises an elongate generally rectangular platform surface 2 bordered on each of its two longer sides by substantially parallel side walls 3 and divided by a central wall 4 extending substantially parallel to and approximately midway between the sidewalls 3. The platform surface 2, side walls 3 and central wall 4 together define two channels in which cables may lie, supported on the platform surface 2.

The platform surface 2 is formed by the upper edges of walls 5 defining twelve open topped box structures 6 and by webs 7 extending between the box structures 6. The width of the channel defined by the side walls 3 is greater than that of the outside edges of the box structures 6 which allows cable trays to nest when stacked.

The bottom of each box structure 6 includes a drainage aperture 8.

Each of the webs 7 extending between the box structures includes four elongate spaced apart and substantially parallel apertures 9 extending therethrough. The apertures 9 are arranged to receive formations of a cable support, as described below.

The side walls 3 of the cable tray each include a channel 10 in their top surface for receiving an earthing rod or wire (not shown). The top surface of each side wall 3 is cut away at two points 11 along its length to permit a conduction strap to pass out of the cable tray through the side wall 3 when a cover is placed over the cable tray. The cut away parts 11 also allow fastening means to be introduced to allow cable trays to be fastened together side to side to increase the width of cable supporting surface in a given installation. A suitable fastening means is described further below.

The side walls 3 of the cable tray also each include three apertures 12 for receiving clips, described further below, for securing a cover to the cable tray.

At each end of the cable tray 1 means are provided to engage the cable tray 1 with another similar cable tray. This means comprises first 13 and second 14 plates located at opposite lateral sides of each end respectively of the cable tray. The top surfaces of the first plates 13 lie substantially in the plane of the platform surface 2 and form a part of that surface. The side walls 3 extend along the side of each first plate 13. The underside of each first plate 13 includes a substantially circular recess 15.

The top surface of the second plates 14 lies substantially in the plane of the bottom surface of each first plate 13. Projecting above the top surface of each second plate 14 is a substantially cylindrical projection 16 the edge of which directed away from the cable tray 1 is bevelled.

When two cable trays are placed end to end and pushed together so that the ends of their respective side walls 3 abut the first plate 13 of each cable tray will ride over the second plate 14 of the other tray, facilitated by the bevelled edge of the substantially cylindrical projection 16, until each substantially cylindrical portion 16 is received into the recess 15 on the underside of each first plate 13, engaging the two cable trays together in a releasable manner. It will be seen that when two cable trays are engaged relative movement of the two cable trays in three mutually orthogonal directions is substantially prevented. Engagement and disengagement of the trays is, of course, dependent on some resilience in the material from which the trays are made.

In use a number of cable trays would typically be joined together to support cables, for example on a flat roof between a cabin and antenna. The cable trays do not normally require anchoring, trays of 1 metre length usually have a mass of about 15kg. However, if necessary, ballast such as sand or gravel may be introduced into the box structures 6.

Channels 17 formed between the box structures 6 on the underside of the cable tray allow water to pass through the cable tray, preventing a line of joined cable trays from damming water.

There is a degree of flexibility in the material from which the cable tray is moulded, and it also exhibits some creep. This allows the tray to adapt somewhat to uneven surfaces, so that it places an even load on the surface on which it is supported.

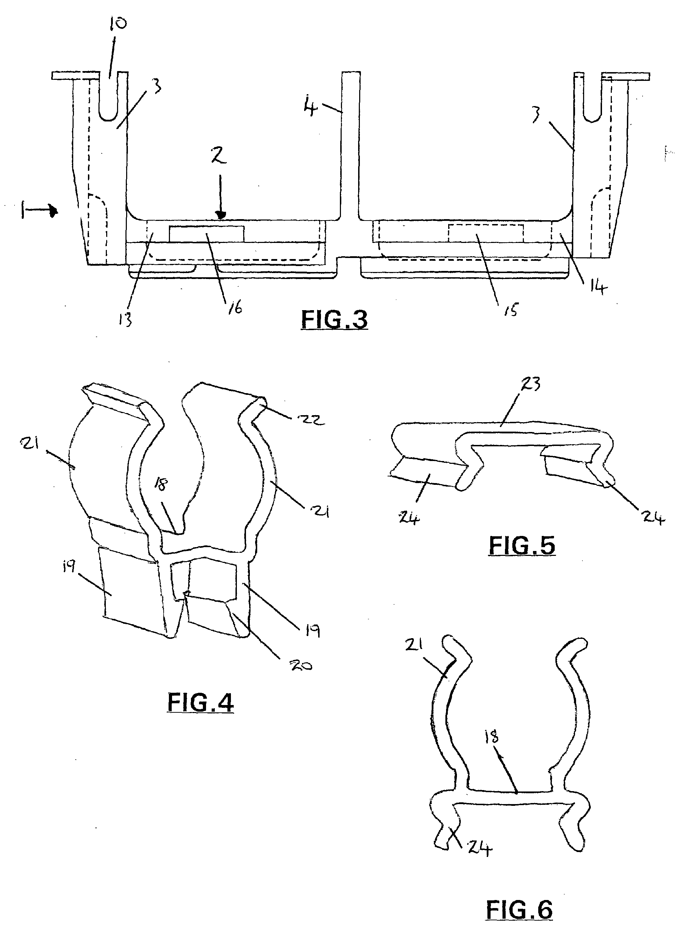

Referring to Figure 4 there is shown a cable support for use with the cable tray of Figures 1 to 3. The support is moulded in one piece from high density polyethylene. The support comprises a generally rectangular plate portion 18. Extending generally perpendicularly from opposite sides of the plate portion are two legs 19. An end portion of the side of each leg 19 facing the other leg includes a wedge shaped portion 20, forming a half arrowhead at the end of each leg 19. The legs 19 are arranged to be inserted into two side by side apertures 9 in a web 7 of a cable tray 1. The material from which the cable support is made exhibits some resilient flexibility and the legs 19 are arranged such that some flexing is required for insertion into the apertures so that when inserted the legs 19 return substantially to their original position so that the wedge shaped portions 20 extend behind the web 7 securing the support in place. By flexing the legs of the cable support mounted on a cable tray it is possible to remove the support from the tray.

Extending perpendicularly from opposite ends of the plate portion 18 of the cable support to the legs 19 are two arms 21. Most of the length of each arm is arcuate in shape and the concave side of each arm is directed towards the other arm. Together the arms 21 and plate portion 18 define a generally U-shaped slot for receiving and supporting a cable. The free end 22 of each arm 21 is bent through about 90°, so that it extends away from the free end 22 of the other arm 21.

Figure 5 shows a cap for the cable support of Figure 4. The cap is moulded in one piece from the same plastics material as the support and comprises a substantially flat plate 23 with V-shaped 24 legs extending from opposite ends respectively with the point of the V of each leg 24 being directed towards the other leg 24. The cap is shaped to be slidably engageable with the free ends of the two arms 21 of the cable support, with the free ends 22 of the arms 21 received between the legs 24 of the cap. The distance between the legs 24 of the cap is less than the normal distance between the outside edges of the free ends 22 of the arms of the support so that the arms 21 must be drawn together to slide the cap on. The resiliency of the material from which the support is made tends to urge the arms 21 apart creating friction with the cap and thereby tending to hold the cap in place. The cap serves to capture a cable received between the arms 121 and may cause the arms 21 to grip the cable, by drawing the arms together.

Figure 6 shows a further cable support. This support includes a plate portion 18 and arms 21 similar to that of Figure 4, and legs 24 similar to those of the cap 24. This support can thus be engaged with a support of the type shown in Figure 4 acting as a cap to that support, and also receive a cable and be fitted with a cap, or further support.

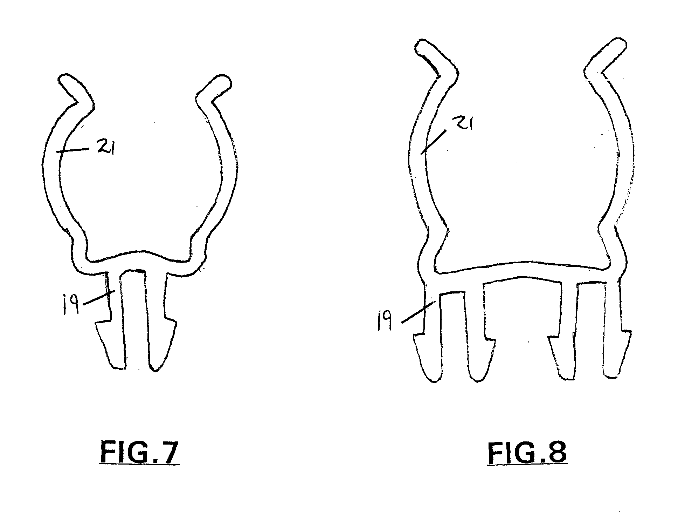

Figures 7 and 8 show further supports for mounting on a cable tray. Both include arms 21 similar to those of the support of Figure 4. They are, however, of different widths and include different leg formations. The support of Figure 7 includes two legs 19, each having a wedge shaped portion on its outside edge, arranged to be received into a single aperture 9 in a cable tray. The support of Figure 8 includes two pairs of such legs 19 for receipt into two side by side apertures.

The web 7 of each half of a cable tray includes four spaced apart apertures. Many different configurations of cable support can therefore be mounted on the tray. Other tray and support configurations are, of course, possible.

Suitable cable supports are mounted on the cable tray prior to installation of cable. These serve to align and space apart the cables being supported. It is not necessary for a cable guide to be mounted in every available position along a particular cable tray.

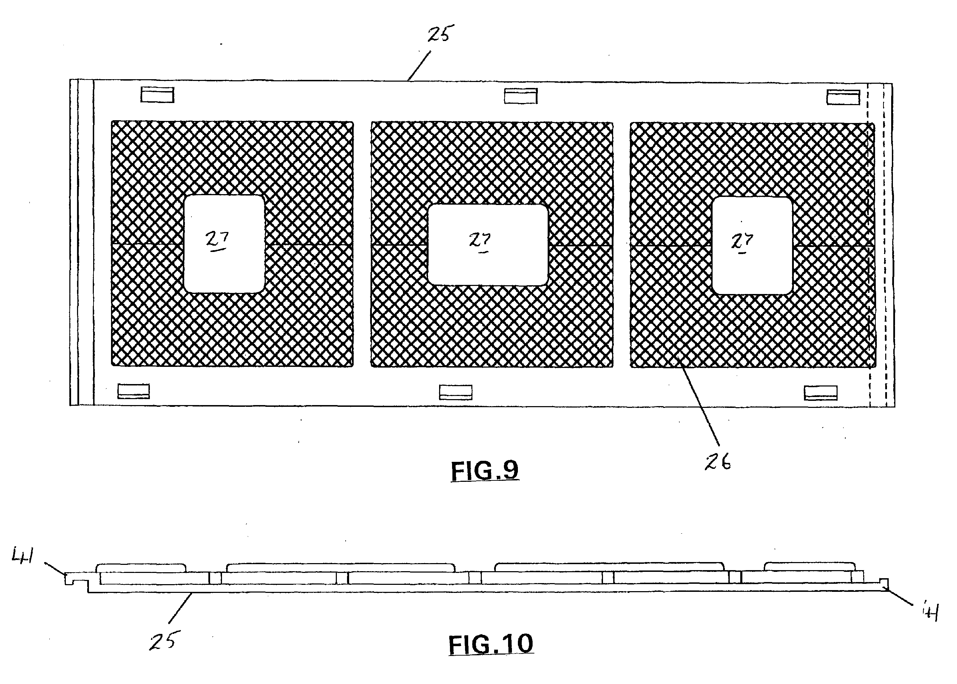

Referring to Figures 9 to 11 there is shown a cover 25 for the cable tray of Figures 1 to 3. The cover 25 is also moulded from recycled plasticized PVC. The top surface includes a non-slip relief pattern 26 and three non-patterned areas 27 for carrying indicia. The underside includes a number of ribs 28 to add rigidity to the cover 25. Some of the ribs 28 define a slot 29 extending along the centre of the cover 25, intended to receive the central wall 4 of a cable tray when the cover is placed on the tray.

The underside also includes a number of spaced apart tongues 30 arranged alternately with a number of spaced apart apertures 31 in two substantially parallel rows along opposite longitudinal edges respectively of the cover 25. The tongues 30 are arranged to be received into the slot 10 of each side wall 3 of a cable tray 1, possibly with an interference fit, to releasably align and/or retain the cover 2 on a tray 1.

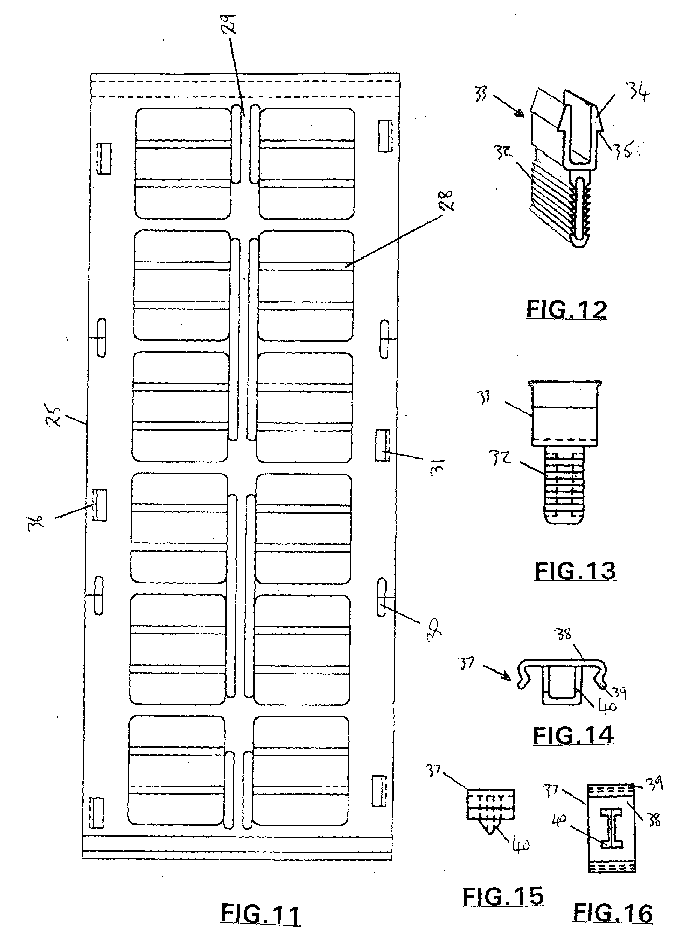

The apertures 31 are arranged to receive clips installed into apertures 12 in the side wall 3 of the cable tray 1. A clip is shown in Figures 12 and 13. The clip is moulded in one piece from a plastics material and includes a foot portion 32 for insertion into an aperture 12 of the tray 1. Opposite sides of the foot portion 32 include dogtooth shaped ribs operative to allow insertion but restrict removal of the foot portion 32 from an aperture 31. A head portion 37 extends from the foot portion 32. It is wider than the foot portion 32 to prevent it being received into an aperture 12, and is of generally square U-shaped cross-section. The free ends of the U include wedge shaped portions 34 ending in projecting shoulders 35. Laterally, as seen from Figure 13, the top of the clip is slightly wider than the remainder.

In use clips are inserted into the apertures 12 of a cable tray. A cover 25 is then placed over the tray so that the head of each clip is received into an aperture 31 in the cover 25.

Each aperture 31 of the cover includes an internal step 36 arranged to engage with the projecting shoulder 35 of a clip, so that the clip retains the cover 25 on the tray. The head 33 of the clip does not extend above the cover 25.

In order to ensure that the cover 25 is retained on the tray a locking element 37, shown in Figures 13 to 16, may be fitted to the head of a clip to urge the arms of the U-shaped head 33 apart to ensure engagement of the shoulders 35 with the sides of the aperture 31 in the cover. The locking element is moulded in one piece from a plastics material and includes a top 38 with depending V-shaped legs 39 arranged to snap fit over the head 33 of the clip, the V-shaped legs 39 snapping over the wider portion at the top of the head 33. A wedge shaped portion 40 extends from the top and when the element is fitted to a clip it extends between the free ends of the U-shaped head, urging them apart.

The locking element 37 is a different, preferably contrasting, colour to the cover 25 to enable a user to easily readily see if the cover 25 has been locked in place.

Opposite lateral ends of the cover are formed into mutually cooperating hook like formations 41 to enable adjacent ends of covers to be engaged with each other to reduce the ingress of moisture and the like between covers.

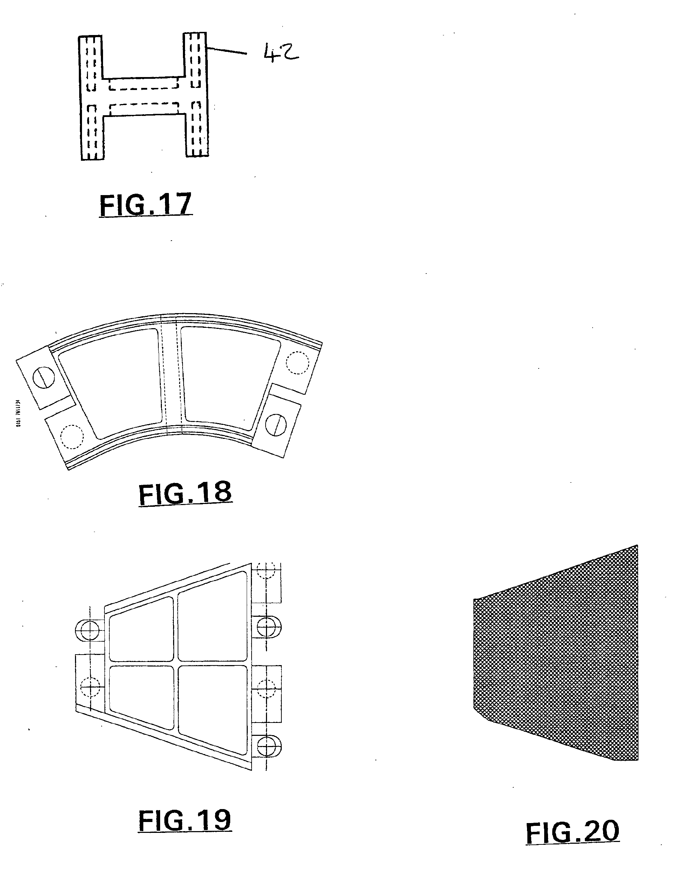

Figure 17 shows a moulded plastics H-shaped clip 42 for insertion into the apertures 11 in the side walls 3 of two adjacent cable trays 1 to fasten the two trays together.

Cable tray installations may be complex and required to follow curved paths and include junctions. Figures 18,19,21 and 22 show cable tray components that may be used with cable trays of the type shown in Figure 1.

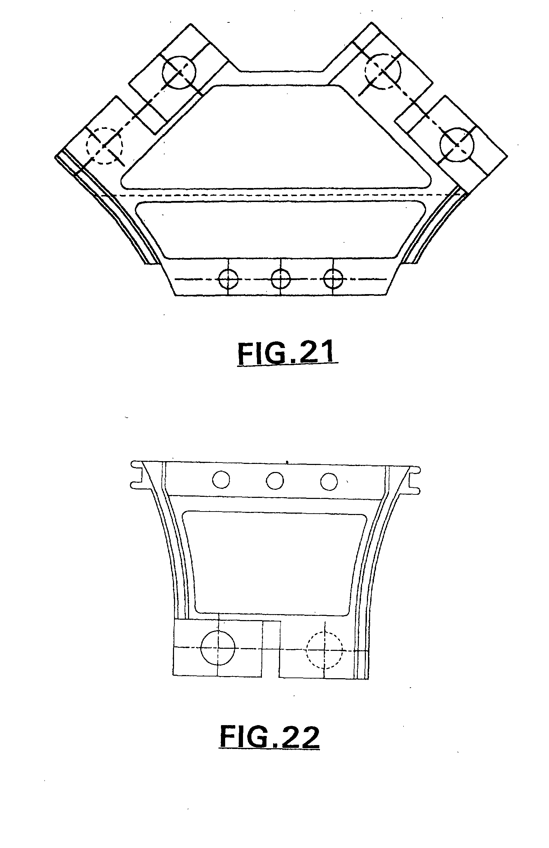

Figure 18 shows a curved cable tray, Figure 19 shows a component for connecting two cable trays to a single parallel extending cable tray. Figures 21 and 22 show two releasably connectable components which when connected together enable a single cable tray to be connected to two cable trays diverting at right angles to each other.

Figure 20 shows a metal plate cover for the component of Figure 19. Suitable covers may be produced for the other components shown.

As well as being installed on surfaces cable trays according to the invention may also be installed in the ground, so that the surface of a cover on the tray lies generally flush with the ground. The cover may be reinforced. The tray may be set in concrete or the like, or simply backfilled with a gravel, or the like, surround.

The above embodiment is described by way of example only. Many variations are possible without departing from the invention.

## Claims

1. A cable tray(1) having one or more separately formed cable supports (4,6,7,8) mounted thereon.

2. A cable tray as claimed in claim 1, wherein the cable tray and cable support(s) engage with a snap fit.

3. A cable tray as claimed in either claim 1 or 2, wherein the cable tray and cable support(s) respectively comprise engageable formations (9,19,20).

4. A cable tray as claimed in claim 3, wherein the cable tray comprises one or more apertures (9) and the cable support(s) comprise one or more projections (19,20) arranged to be received into the apertures.

5. A cable tray as claimed in claim 4, comprising a row of spaced apart formations (9) for receiving a cable support, to enable the support to be mounted in a number of different positions.

6. A cable tray as claimed in claim 5 comprising a plurality of spaced apart rows of spaced apart formations for receiving a cable support.

7. A cable tray as claimed in either claim 5 or 6, wherein the row of formations comprises a row of substantially parallel spaced apart slots and/or apertures.

8. A cable tray as claimed in any preceding claim, wherein the cable support comprises two spaced apart arms (21) arranged to receive cable therebetween.

9. A cable tray as claimed in claim 8, wherein the arms of the cable support are resiliently flexible.

10. A cable tray as claimed in either claim 8 or 9, wherein the cable support is moulded from a plastics material.

11. A cable tray as claimed in any of claims 8 to 10, wherein the cable support includes a releasably mountable cap operative to capture a cable on the support.

12. A cable tray as claimed in any of claims 8 to 11, wherein a second cable support is releasably mounted on a first cable support, the second cable support being operative to capture a cable on the first support.

13. A cable tray as claimed in any preceding claim, wherein the cable tray is formed in one piece.

14. A cable tray as claimed in any preceding claim including a cover.

15. A cable tray as claimed in claim 14 including clips for retaining the cover on the tray.

16. A cable tray as claimed in claim 15, wherein the clips are lockable by fitting of a separate element (37) to the clip.

17. A cable tray according to any preceding claim, wherein opposite ends of the tray respectively comprise engageable formations allowing trays to be engaged with one another tray end to end, the formations being arranged to restrict relative movement of two engaged trays in three mutually orthogonal directions.

18. A moulded cable tray including a formation for engagement with a separate cable support to enable the cable support to be mounted on the tray.

19. A cable tray as claimed in claim 18, wherein the formation comprises an aperture.
